# EUROPEAN PATENT APPLICATION

(11) **EP 4 239 607 A1**
(43) Date of publication of application: **06.09.2023**
(21) Application number: 21896561.4
(22) Date of filing: 07.10.2021
(51) Int. Cl.: G07G 1/00, G07G 1/14, G06F 30/27, G06K 9/00

(54) **INTELLIGENT WEIGHING APPARATUS BASED ON COMPUTER VISION TECHNOLOGY, AND INTELLIGENT WEIGHING METHOD**

(30) Priority: 26.11.2020 CN 202011348099
(71) Applicant: Ronsson Technology Company Limited, Beijing 100068 (CN)
(72) Inventor: WEI, Ping, Beijing 100068 (CN); LI, Hao, Beijing 100068 (CN)
(74) Representative: Gulde & Partner
(86) International application number: PCT/CN2021/122531
(87) International publication number: WO 2022/111059

(57) **Abstract**

Provided are an intelligent weighing apparatus based on computer vision technology, and an intelligent weighing method. The apparatus includes: a system configuration assembly, which is configured to set software parameters, hardware parameters and merchant information of the intelligent weighing apparatus; a weighing platform, which is configured for the placement of goods to be identified and weighed, sensing a weight and a change in the weight, and obtaining goods weight information of the goods; a visual sensor, which is configured to collect visual information of the goods placed on the weighing platform; an identifier, which is configured to perform goods identification on the basis of the visual information, the weight information and an identification model to obtain a goods identification result; an identification feedback device, which is configured to display candidate goods information by combining the goods identification result and goods information, receive user feedback, transmit the goods information confirmed in the user feedback to a price tag printer or a checkout POS system, and feed back the goods information to a modeling platform; the modeling platform, which is configured to train the identification model on the basis of the collected visual information, the weight information and the user feedback; and a goods information synchronization assembly, which is configured to update the goods information.

## Description

### CROSS REFERENCES TO RELATED APPLICATIONS

The present application claims the priority of the Chinese patent application No. 202011348099.6 filed on November 26, 2020, for all purposes, the disclosure of which is incorporated herein by reference in its entirety as part of the present application.

### TECHNICAL FIELD

The application relates to the technical field of information processing, and in particular, relates to an intelligent weighing apparatus and an intelligent weighing method based on computer vision technology.

### BACKGROUND

In the field of offline goods sales, the main settlement method is to identify goods by scanning goods bar codes, and then perform goods settlement. This goods identification and settlement method has relatively low efficiency, which leads to a long queue in supermarkets, convenience stores and other places with large traffic.

For non-standard goods without goods bar code, such as fruits and vegetables, customers usually need to deliver the selected goods to a specific weighing platform for weighing and measuring, a salesperson manually selects the goods types, prints and attaches the corresponding bar code labels containing the types, unit prices and price information, and then the customers can queue up at a checkout counter with the bar code labels. Therefore, for goods without goods bar code, a lot of manpower is needed for settlement, which leads to higher settlement cost and inevitably increases the queuing time of consumers.

Accordingly, it is expected that there is a technology that can intelligently identify and weigh goods without bar codes, and can conveniently settle goods according to the results of goods identification and weighing. With the development of artificial intelligence, especially the application of deep learning, it is possible to identify all kinds of goods to be weighed intelligently through computer vision technology and improve the efficiency of weighing and settlement.

### SUMMARY

The embodiments of the present disclosure provides an intelligent weighing apparatus and method based on computer vision technology, which can conveniently settle goods according to goods identification results and weighing results, thereby improving the efficiency of goods settlement and reducing the labor cost consumed in goods settlement.

According to one aspect of the present disclosure, it is provided an intelligent weighing apparatus based on computer vision technology, which includes:

a system configuration component, configured to set software parameters, hardware parameters and systematic configuration of merchant information of the intelligent weighing apparatus;

a weighing platform, configured to place the goods to be identified and weighed, sense a weight and the change of the weight, and obtain goods weight information of the goods;

a visual sensor, configured to collect visual information of goods placed on the weighing platform in response to a first trigger;

an identifier, configured to perform goods identification based on the visual information, the weight information and an identification model in response to a second trigger, and to terminate goods identification in response to a third trigger to obtain goods identification results;

an identification feedback device, configured to display candidate goods information combining the goods identification results and goods information, and to receive user feedback, transmit the goods information confirmed by a user feedback to a price tag printer or a cashing POS system, and feed it back to a modeling platform, herein the price tag printer is configured to print goods weighing bar codes based on the user feedback, and the cashing POS system is configured to generate cashing information of the goods according to the user feedback;

a modeling platform, configured to train the identification model based on the collected visual information, the weight information and data of the user feedback in use; and

a goods information synchronization component, configured to update goods information, including updating one or more of goods information such as goods name, goods code, weighing apparatus code, price, pricing method, and illustrative figure.

In one embodiment, the system configuration component is configured to set hardware parameters including different hardware model selections of the weighing platform and the price tag printer.

In one embodiment, the system configuration component is configured to set hardware parameters for setting the visual sensor, including a preview resolution, whether to cut a main body area out, and parameters for cutting the main body area out.

In one embodiment, the system configuration component is configured to set the hardware parameters including tare setting for the weighing platform, including three modes of not subtracting tare weight, one-time subtracting tare weight and continuously subtracting tare weight.

In one embodiment, the system configuration component is configured to set software parameters including merchant selection, store selection and goods management, herein the goods management includes goods information of name, code, price and illustrative figures for browsing and editing.

In one example, the first trigger includes automatically triggering the visual sensor to collect the visual information of the goods placed on the weighing platform when the weighing platform senses that a weight changes and the weight is not zero, and the second trigger includes automatically triggering the identifier to identify goods when the weighing platform senses that a weight changes and the weight is not zero, and the third trigger includes the weight signal being stable so that a stable weight signal is taken as goods weight information for calculating a total price of goods and generating a goods weighing bar code.

In one example, the visual sensor is configured to collect visual information of goods placed on the weighing platform, herein the visual information includes at least one of images and videos, and the visual sensor is configured to collect visual information for building models for new goods, and to collect visual information for goods to be identified, herein when collecting visual information for new goods, the visual sensor is configured to carry out capturing modes including a single-capturing-a-photo-mode, a continuous-capturing-multiple-photos-mode and a video-capturing-mode, and when collecting visual information for goods to be identified, the visual sensor is configured to carry out capturing modes including a single-capturing-a-photo-mode, a continuous-capturing-multiple-photos-mode and a video-capturing-mode.

In one embodiment, the second trigger includes a changes of a content of a visual signal collected by the visual sensor to trigger an identifier to identify goods, and the third trigger includes stabilization of the visual signal to terminate goods identification.

In one embodiment, the visual sensor is located above or on a side of the weighing platform, so as to be able to perceive visual information of goods on the weighing platform with a definition higher than a predetermined definition. When the hardware parameters of the visual sensor are set to cut a main body area out, the main body area of the collected visual information is cut out according to parameters for cutting the main body area out.

In one embodiment, the second trigger includes a manual selection.

In one embodiment, the identification model is configured to perform a conditional filtering or statistical regression to filter out candidate identification results whose weight is greater than a maximum goods weight or less than a minimum goods weight by using a computer vision technology based on deep learning, by considering goods weight information. The identifier is configured to complete identification calculation of the goods identification by using a computing unit in the intelligent weighing apparatus, an adjacent edge computing unit, or a cloud computing unit.

In one embodiment, the cashing POS system includes a POS system of a traditional cash register and a POS system of a self-help cash register. The identification feedback device is configured to adopt an adaptive display strategy based on an identification confidence when displaying candidate goods information, herein when the identification confidences of goods identification results are higher than a predetermined confidence, only goods identification results of a number lower than a predetermined number with a confidence higher than the predetermined confidence are displayed as candidate goods information, and when the identification confidences of goods identification results are lower than the predetermined confidence, the number of displayed goods identification results is increased as candidate goods information. At the same time, identification recall rate is guaranteed, and the difficulty of selection is reduced.

In one embodiment, interactive behaviors of receiving user feedback by using the identification feedback device include clicking to confirm, re-identifying, searching, screening, modifying the price and returning to the system configuration; the interactive behaviors of user feedback include automatically confirming the goods identification results under predetermined conditions, and the user feedback is automatically transmitted to the price tag printer or cashing POS system and fed back to the modeling platform, herein the predetermined conditions include that the identification confidence exceeds an automatic publishing threshold, or a user feedback time exceeds a waiting threshold.

In one embodiment, the identification feedback device includes a search component, which is configured for the user to search goods by using initial letters of goods names or codes, and simultaneously displays trending search candidate goods.

In one embodiment, the identification feedback device includes a screening component, the screening component is configured to preferentially display a list of clearance goods of the same or related categories according to the goods identification results.

In one embodiment, the identification feedback device includes a price modification component, and the price modification component is configured to receive an interactive action of long-pressing a goods information display card of candidate goods information or an element of goods icon and name in the card, and trigger a pop-up price modification tag, so that the user can modify a unit price, a total price or a discount coefficient of the goods. When the selected good is a piece-based goods, the quantity of the goods is fed back through an automatic pop-up window.

In one embodiment, when the confirmed goods information needs to be transmitted to the cashing POS system, the confirmed goods information is transmitted to the POS system through a wired or wireless network, or when the confirmed goods information needs to be transmitted to the price tag printer, the confirmed goods information is transmitted to the price tag printer through a wired network, or when the confirmed goods information needs to be fed back to the modeling platform, the confirmed goods information is uploaded to the modeling platform in a cloud through a wired or wireless network.

In one embodiment, when it is required to return to a system setting interface, the user can return to the system setting interface by sliding on the screen from left to right or from top to bottom.

In one embodiment, the modeling platform is configured to use a computer vision technology based on deep learning to train the identification model based on the collected visual information, the weight information and the data of the user feedback in use, herein the goods weight information is applied to set a weight filtering rule to filter out the identification results of goods whose weight is greater than the maximum goods weight or less than the minimum goods weight, or is applied to statistical goods weight distribution models to assist goods identification; the data of the user feedback in use is applied to the continuous iterative optimization of the identification model; and the trained identification model is distributed to different computing platforms, such as terminal, edge computing or cloud computing platforms.

In one embodiment, the goods information synchronization component is configured to update the updated goods information into the intelligent weighing apparatus to support the display of candidate goods information, herein the goods information synchronization component, including two forms of a Windows^{®} program and a mobile phone APP, completes the update of goods information through database connecting, file uploading and manual editing, and supports the update of goods information in the intelligent weighing apparatus through two connection modes of a merchant intranet and an extranet.

In one embodiment, the intelligent weighing apparatus does not include a cashing POS system and a price tag printer, and is connected as a whole with an external cashing POS system; or the intelligent weighing apparatus includes a cashing POS system; or the intelligent weighing apparatus includes a price tag printer.

According to another aspect of the present disclosure, it is provided an intelligent weighing method for an intelligent weighing apparatus based on computer vision technology, including:

setting software parameters, hardware parameters and goods information of the intelligent weighing apparatus by using a system configuration component;

placing a goods to be identified and weighed by using a weighing platform, sensing a weight and a weight change, and obtanining goods weight information of the goods;

collecting visual information of goods placed on the weighing platform by using a visual sensor in response to a first trigger;

using an identifier to identify the goods in response to a second trigger based on the visual information, the weight information and an identification model, and terminating the goods identification in response to a third trigger to obtain goods identification results;

displaying candidate goods information by combining the goods identification results and goods information by using an identification feedback device, receiving user feedback, and transmitting the goods information confirmed by a user feedback to a price tag printer or a cashing POS system, and feed it back to a modeling platform, herein the price tag printer is configured to print a goods weighing bar code based on the user feedback, and the cashing POS system is configured to generate cashing information of the goods according to the user feedback;

using the modeling platform to train the identification model based on the collected visual information, the weight information and data of the user feedback in use;

updating a goods information synchronization component to update goods information, including updating one or more of goods information such as goods name, goods code, weighing apparatus code, price, pricing method, illustrative figure, etc.

In one embodiment, the system configuration component is configured to set hardware parameters including selection of different hardware models of the weighing platform and the price tag printer.

In one embodiment, the system configuration component is configured to set hardware parameters of the visual sensor, including a preview resolution, whether to cut a main body area out, and parameters for cutting the main body area out.

In one embodiment, the system configuration component is configured to set hardware parameters for tare weight setting of the weighing platform, including three modes of not subtracting tare weight, one-time subtracting tare weight and continuously subtracting tare weight.

In one embodiment, the system configuration component is configured to set software parameters including merchant selection, store selection and goods management, herein the goods management includes goods information of name, code, price and illustrative figures for browsing and editing.

In one embodiment, the first trigger includes automatically triggering the visual sensor to collect the visual information of the goods placed on the weighing platform when the weighing platform senses that a weight changes and the weight is not zero, and the second trigger includes automatically triggering the identifier to identify goods when the weighing platform senses that a weight changes and the weight is not zero, and the third trigger includes the weight signal being stable so that a stable weight signal is taken as goods weight information for calculating a total price of goods and generating a goods weighing bar code.

In one embodiment, the visual sensor is configured to collect visual information of goods placed on the weighing platform, herein the visual information includes at least one of images and videos, and the visual sensor is configured to collect visual information for building models for new goods; and collect visual information for the goods to be identified, herein the visual sensor is configured to carry out a capturing mode including a single-capturing-a-photo-mode, a continuous-capturing-multiple-photos-mode and a video-capturing-mode when collecting visual information for building models for new goods, and is configured to carry out a capturing mode including a single-capturing-a-photo-mode, a continuous-capturing-multiple-photos-mode and a video-capturing-mode when collecting visual information for the goods to be identified.

In one embodiment, the second trigger includes a changes of a content of a visual signal collected by the visual sensor to trigger the identifier to identify the goods, and the third trigger includes stabilization of the visual signals to terminate the identification of the goods.

In one embodiment, the visual sensor is located above or on a side of the weighing platform, so as to be able to perceive visual information of goods on the weighing platform with a definition higher than a predetermined definition, and when the hardware parameters of the visual sensor are set to cut the main body area out, the main body area of the collected visual information is cut according to the parameters for cutting the main body area out.

In one embodiment, the second trigger includes a manual selection.

In one embodiment, the identification model is configured to perform a conditional filtering or statistical regression to filter out candidate identification results whose weight is greater than a maximum goods weight or less than a minimum goods weight by using a computer vision technology based on deep learning, combined with goods weight information. The identifier is configured to complete identification calculation of the goods identification by using a computing unit in the intelligent weighing apparatus, an adjacent edge computing unit, or a cloud computing unit.

In one embodiment, the cashing POS system includes a POS system of a traditional cash register and a POS system of a self-help cash register. The identification feedback device is configured to adopt an adaptive display strategy based on an identification confidence when displaying candidate goods information, herein when the identification confidences of goods identification results are higher than a predetermined confidence, only goods identification results of a number lower than a predetermined number with a confidence higher than the predetermined confidence are displayed as candidate goods information, and when the identification confidences of goods identification results are lower than the predetermined confidence, the number of displayed goods identification results is increased as candidate goods information.

In one embodiment, interactive behaviors of receiving user feedback by using the identification feedback device include clicking to confirm, re-identifying, searching, screening, modifying the price and returning to the system configuration; the interactive behaviors of user feedback include automatically confirming the goods identification results under predetermined conditions, and the user feedback is automatically transmitted to the price tag printer or cashing POS system and fed back to the modeling platform, herein the predetermined conditions include that the identification confidence exceeds an automatic publishing threshold, or a user feedback time exceeds a waiting threshold.

In one embodiment, the identification feedback device includes a search component, which enables users to search goods by using initials letters of goods names or codes, and simultaneously displays trending search candidate goods.

In one embodiment, the identification feedback device includes a screening component, and the screening component is configured to preferentially display a list of clearance goods of the same or related categories according to the goods identification results.

In one embodiment, the identification feedback device includes a price modification component, and the price modification component is configured to receive an interactive action of long-pressing a goods information display card of candidate goods information or an element of goods icon and name in the card, and trigger a pop-up price modification tag, so that the user can modify a unit price, a total price or a discount coefficient of the goods. When the selected good is a piece-based goods, the quantity of the goods is fed back through an automatic pop-up window.

In one embodiment, when the confirmed goods information needs to be transmitted to the cashing POS system, the confirmed goods information is transmitted to the POS system through a wired or wireless network, or when the confirmed goods information needs to be transmitted to the price tag printer, the confirmed goods information is transmitted to the price tag printer through a wired network, or when the confirmed goods information needs to be fed back to the modeling platform, the confirmed goods information is uploaded to the modeling platform in a cloud through a wired or wireless network.

In one embodiment, when it is required to return to a system setting interface, the user can return to the system setting interface by sliding on the screen from left to right or from top to bottom.

In one embodiment, the modeling platform is configured to use a computer vision technology based on deep learning to train the identification model based on the collected visual information, the weight information and the data of the user feedback in use, herein the goods weight information is applied to set a weight filtering rule to filter out the identification results of goods whose weight is greater than the maximum goods weight or less than the minimum goods weight, or is applied to statistical goods weight distribution models to assist goods identification; the data of the user feedback in use is applied to the continuous iterative optimization of the identification model; the trained identification model is distributed to different computing platforms, such as terminal, edge computing or cloud computing platforms.

In one embodiment, the goods information synchronization component is configured to update the updated goods information into the intelligent weighing apparatus to support the display of candidate goods information, herein the goods information synchronization component, including two forms of a Windows^{®} program and a mobile phone APP, completes the update of goods information through database connecting, file uploading and manual editing, and supports the update of goods information in the intelligent weighing apparatus through two connection modes of a merchant intranet and an extranet.

In one embodiment, the intelligent weighing apparatus does not include a cashing POS system and a price tag printer, and is connected as a whole with an external cashing POS system; or the intelligent weighing apparatus includes a cashing POS system; or the intelligent weighing apparatus includes a price tag printer.

According to another aspect of the present disclosure, it is provided an intelligent weighing method, which includes the following steps: system configuration, for setting the system configuration of software parameters, hardware parameters and goods information; transmission synchronization, for uploading one or more kinds of goods information including obtaining goods name, goods code, weighing apparatus code, price, pricing method and illustrative figure; goods database update, for updating the uploaded information to a database; information collection, for collecting visual information and goods weight information; training an identification model by combining the visual information and goods weight information; delivering the identification model to an identification service; weighing a goods to be weighed that are placed on a weighing platform to obtain weight information; collecting the visual information of goods; identifying types of goods by using the identification model in the identification service; displaying goods information of the candidate identification result; identification feedback, for receiving user feedback information, transmitting a confirmation result to a cashing POS system or a bar code printer, and updating it to a cloud training platform to support iterative updating of the model; and the cashing POS system adding goods information, or the bar code printer printing a price tag.

### BRIEF DESCRIPTION OF THE DRAWINGS

In order to explain the technical scheme of the embodiment of the present disclosure more clearly, the drawings needed to be used in the description of the embodiment or the prior art will be briefly introduced below. Obviously, the drawings in the following description are only some embodiments of the present disclosure. For ordinary people in the field, other drawings may be obtained according to these drawings without creative work.
FIG. 1 schematically illustrates a block diagram of an intelligent weighing apparatus according to one embodiment of the present disclosure;
FIG. 2 schematically illustrates an external structural diagram of an intelligent weighing apparatus according to an embodiment of the present disclosure;
FIG. 3 schematically illustrates a flowchart of an intelligent weighing method according to one embodiment of the present disclosure; and
FIG. 4 schematically illustrates a flowchart of an intelligent weighing method according to another embodiment of the present disclosure.

### DETAILED DESCRIPTION

In the following, the technical scheme in the embodiment of the disclosure will be clearly and completely described with reference to the attached drawings. Obviously, the described embodiment is a part of the embodiment of the disclosure, but not the whole embodiment. Based on the embodiments in this disclosure, all other embodiments obtained by ordinary technicians in this field without creative labor belong to the protection scope of this disclosure.

Usually, after a customer selects fruit or vegetable in a supermarket (and packs them in a packaging bag), he/she will weigh them on a designated weighing machine. A clerk will identify the type of the fruit or vegetable selected by the customer with his/her naked eyes, and input a corresponding goods number. The weighing machine will print a bar code identifying the type, weight, unit price and/or total price of the fruit or vegetable while weighing, and the clerk sticks it on the selected fruit or vegetable (or the packaging bag for packing the fruit or vegetable). Customers need to take the fruits or vegetables with bar codes (or bags for packing fruits or vegetables) to a cashier for bar code scanning and pay for them. The whole process is very tedious and complicated.

The technology disclosed by the invention can automatically identify and weigh a goods and obtain goods settlement data without manually identifying the goods, weighing and pasting bar codes identifying the goods and the weight on the goods, and without making customers scan bar codes at a cash register. In this way, when an actual goods is to be settled, the goods can be intelligently identified by using the image of the goods, the weight of the goods and the goods identification model, and the goods settlement result can be generated. The whole process can be done without manual operations of a full-time weigher, which improves the efficiency of goods weighing and settlement and reduces labor costs consumed in goods weighing and settlement. The technical scheme disclosed by the invention can be used for selling goods in various goods sales places, including but not limited to shopping malls, supermarkets, vegetable markets, bakeries, various retail food stores and the like.

In addition, the same goods sold in different goods sales places and in different periods may have their own uniqueness, such as oranges, but different varieties of oranges sold in different goods sales places or even oranges of the same variety may be different in appearance, size and weight, or oranges sold in different periods in the same goods sales place may be different in appearance, size and weight. If an existing or unchanged goods identification model is used, it may not be able to identify these goods accurately and differently. In addition, in some cases, the existing or unchanged goods identification model may be simple and coarse, such as using some ordinary orange photos to train the model. If this goods identification model is directly applied to specific goods sales places, it may also get wrong goods identification results. In addition, there are some new goods that cannot be identified by the existing goods identification model, such as new varieties of oranges or some goods that have not been sold before. Since the existing goods identification model has not been trained with the images of these goods, the goods may not be identified or the wrong goods identification results may be obtained. If a product for intelligent goods identification and weighing is sold to a goods sales place, technicians need to go to its scene frequently to update the goods identification model, which may lead to inefficiency and complexity.

The examples to be introduced next are only corresponding concrete examples, but are not embodiments limiting the disclosure to be specific appearance, hardware, connection relationship, steps, values, conditions, data, sequence, etc. shown and described. Those skilled in the art can use the concepts of the present disclosure to construct more embodiments not mentioned in this specification by reading this specification.

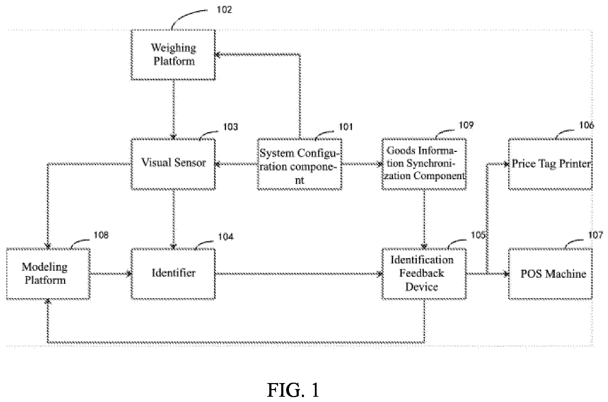

FIG. 1 schematically illustrates a block diagram of an intelligent weighing apparatus according to one embodiment of the present disclosure. The intelligent weighing apparatus 100 includes: a system configuration component 101, configured to set software parameters, hardware parameters and goods information of the intelligent weighing apparatus; a weighing platform 102, configured to place a goods to be identified and weighed, sense a weight and a weight change, and obtain goods weight information of the goods; a visual sensor 103, configured to collect visual information of goods placed on the weighing platform in response to a first trigger; an identifier 104, configured to perform goods identification based on the visual information, the weight information and the identification model in response to a second trigger, and to terminate goods identification in response to a third trigger to obtain goods identification results; an identification feedback device 105, configured to display candidate goods information by combining the goods identification result with goods information, receive user feedback, and transmit the goods information confirmed by a user feedback to a price tag printer 106 or a cashing POS system 107, and feed it back to a modeling platform 108, herein the price tag printer 106 is configured to print the goods weighing bar codes based on the user feedback, and the cashing POS system 107 is configured to generate cashing information of the goods according to the user feedback; the modeling platform 108 is configured to train the identification model based on the collected visual information, the weight information and data of the user feedback in use; and a goods information synchronization component 109, configured to update goods information, including one or more POS systems of self-service cash registers that update goods information such as goods name, goods code, weighing apparatus code, price, pricing method, and illustrative figure.

However, in the technical scheme of the embodiment of the present disclosure, the goods identification model can be gradually established and improved in the actual operation process through the actually collected image of the goods and the confirmation of the goods as user feedback without initially training the image and establishing the goods identification model or with only establishing a simple goods identification model, and the process of weighing and using is the process of learning, thus simplifying the process of machine learning. User feedback is provided to confirm whether the identification result of the goods identification model is accurate and fed back to the goods identification model to further optimize the model, the use process is very simple, and the feeling of customers and goods sales places is better. In the specific use process, after the goods identification of the actual goods is completed, the goods images collected for the actual goods and the confirmation of the goods may also be used as training images, and further learning can be carried out by using the training mages, so as to strengthen the learning of the goods identification model, improve the accuracy of goods identification, and save the time and cost of learning the training images separately and establishing the goods identification model. After purchasing the product equipped with this technology, the goods sales place can directly train and improve the goods identification model that is adapted to characteristics of the goods sales place while using the product for weighing and cashong. In addition, the weight result of weighing may be added to further optimize the goods identification model itself or the identification result of the goods identification model.

In one embodiment, the system configuration component is configured to set hardware parameters including different hardware model selections of the weighing platform and the price tag printer.

In one embodiment, the system configuration component is configured to set hardware parameters for setting the visual sensor, including a preview resolution, whether to cut the main body area out, and parameters for cutting the main body area out. The preview resolution indicates the resolution of the preview camera image.

If the main body area is cut out, for example, the area outside the main body in the image of the goods is cut off.

The parameters for cutting the main body area out can be used to cut the main body area of the collected image out, for example, the parameters for cutting the main body area out are used to define coordinates of the main body area to be cut out. In some embodiments, for example, by cutting off the area outside the weighing platform from the image of the goods, it is possible to reduce errors of the identified image or the image for training caused by interference outside the weighing platform, such as hands and plastic bags. Alternatively, by identifying foreground of the goods and surrounding background in the image of the goods, and cutting off the surrounding background of the goods from the image of the goods, it is possible to filter out the image errors caused by interference around the goods (not just outside the weighing platform) such as hands and plastic bags. Of course, the images of goods packed with plastic bags or other packages may also be used as a whole for identification or training.

In one embodiment, the system configuration component is configured to set hardware parameters of tare setting for the weighing platform, including not subtracting tare weight, one-time subtracting tare weight and continuously subtracting tare weight. Not subtracting tare weight means that the current weighing does not need to subtract the tare weight (the weight of the goods' tare). One-time tare weight refers to subtracting a configured tare weight in current weighing. Continuously subtracting tare weight means subtracting the configured tare weight for each subsequent weighing for the configured goods.

In one embodiment, the system configuration component is configured to set software parameters including merchant selection, store selection and goods management, herein the goods management includes goods information of name, code, price and illustrative figures for browsing and editing.

In one embodiment, the first trigger includes automatically triggering the visual sensor to collect the visual information of the goods placed on the weighing platform when the weighing platform senses that a weight changes and the weight is not zero, and the second trigger includes automatically triggering the identifier to identify goods when the weighing platform senses that a weight changes and the weight is not zero, and the third trigger includes the weight signal being stable so that a stable weight signal is taken as goods weight information for calculating a total price of goods and generating a goods weighing bar code. For example, when the weight obtained by the weighing platform changes and the weight is not zero, for example, when something is put on the weighing platform, the visual sensor starts to collect the visual information of the goods, and the identifier starts to identify the goods. This can avoid the visual sensor from collecting the interference images of things that do not need to be weighed, such as shaking hands, and save the power of the visual sensor and the identifier.

In one example, the visual sensor is configured to collect visual information of goods placed on the weighing platform, herein the visual information includes at least one of images and videos, and the visual sensor is configured to collect visual information for building models for new goods, and to collect visual information for goods to be identified, herein when collecting visual information for new goods, the visual sensor is configured to carry out capturing modes including a single-capturing-a-photo-mode, a continuous-capturing-multiple-photos-mode and a video-capturing-mode, and when collecting visual information for goods to be identified, the visual sensor is configured to carry out capturing modes including a single-capturing-a-photo-mode, a continuous-capturing-multiple-photos-mode and a video-capturing-mode.

In one embodiment, the second trigger includes a change of a content of the collected visual signal to trigger the identifier to identify goods, and the third trigger includes stabilization of the visual signal to terminate the identification of goods. In this way, according to the change of the content of the visual signal collected by the visual sensor, the identifier starts to identify the goods, which can also avoid interference and save the power of the identifier.

In one embodiment, the visual sensor is located above or on a side of the weighing platform, so as to sense the visual information of goods on the weighing platform with a definition higher than a predetermined definition. When the hardware parameters of the visual sensor are set to cut the main body area out, the main body area of the collected visual information is cut out according to the parameters for cutting the main body area out.

In one embodiment, the second trigger includes a manual selection. That is, the goods identification of the identifier is manually started.

In one embodiment, the identification model is configured to filter out candidate identification results whose weight is greater than the maximum goods weight or less than the minimum goods weight, combining with the goods weight information by using a computer vision technology based on deep learning, and the identifier is configured to use a computing unit in an intelligent weighing apparatus, an adjacent edge computing unit, or a cloud computing unit to complete identification calculation of goods identification.

For example, for some specific goods, for example, watermelons with similar shapes and patterns, ordinary watermelons and small Kirin melons are two different species. If the identification results of the goods identification model are ordinary watermelons and small Kirin melons, but the weight obtained by the weighing platform is obviously smaller than the minimum weight of ordinary watermelons, the large watermelons in the goods identification results can be filtered out, leaving the identification results of small Kirin melons. Or if the identification result of the goods identification model is the ordinary big watermelon, the goods identification result is changed from the ordinary big watermelon to the small Kirin melon, so that two watermelon species with different sizes can be distinguished more accurately. The filtered or changed goods identification results alone or together with the currently collected image of the goods (and the weight obtained by the weighing platform) can also be input to the goods identification model, so as to further train or update the goods identification model so as to identify the goods more accurately in the next goods identification.

In one embodiment, the cashing POS system includes a traditional cash register and a self-service cashing POS system, and the identification feedback device is configured to adopt an adaptive display strategy based on an identification confidence when displaying candidate goods information, herein when the identification confidences of goods identification results are higher than the predetermined confidence, only goods identification results of a number lowever than a predetermined number (for example, a few) with a confidence higher than the predetermined confidence are displayed as candidate goods information, and when the identification confidences of goods identification results are lower than the predetermined confidence, the number of identification results displayed is increased as candidate goods information. While ensuring an identification recall rate, it reduces the difficulty of selection.

In one embodiment, interactive behaviors of the identification feedback device receiving user feedback include clicking to confirm, re-identifying, searching, screening, modifying the price and returning to the system configuration; the interactive behaviors of user feedback include automatically confirming the goods identification results under predetermined conditions, and the user feedback is automatically transmitted to the price tag printer or cashing POS system and fed back to the modeling platform, herein the predetermined conditions include that the identification confidence exceeds an automatic publishing threshold, or a user feedback time exceeds a waiting threshold.

Here, for example, the identification feedback device displays the candidate goods identification results identified by the goods identification model. At this time, because the goods identification model has not been established and improved yet, or it is simply trained, more goods identification results or inaccurate goods identification results may be identified through identification, for example, ordinary watermelons with seeds and seedless watermelons, etc. At this time, the cashier or customer can select the actual goods category through an interactive behavior on the identification feedback device to confirm the goods. The identification feedback device may have a touch screen, including resistive, capacitive, infrared, surface acoustic wave, etc. It may also be other intelligent human-computer interactors, such as voice identification interface, and it may also include human-computer interactors being developed or appearing in the future. If there is no actual goods category in the goods identification result at this time, the cashier or customer may also confirm the goods by searching the database. Cashiers or customers can also use the identification feedback to modify the price of goods, return to the system configuration and so on.

In one embodiment, the identification feedback device includes a search component configured for a user to search goods by the initials of goods names or codes, and at the same time, to show trending search candidate goods.

In one embodiment, the identification feedback device includes a screening component configured to preferentially display a list of clearance goods of the same or related categories according to the goods identification results. The list of clearance goods is a list of discount and other sales promotions of goods.

In one embodiment, the identification feedback device includes a price modification component configured to receive an interactive action of long-pressing a goods information display card of candidate goods information or an element of goods icon and name in the card, and trigger a pop-up of a price modification label, so that the user can modify a unit price, a total price or a discount coefficient of the goods; and when the selected good is a piece-based goods, a quantity of the goods is fed back through an automatic pop-up window. In this way, the unit price, total price, discount coefficient, quantity, etc. of the goods can be easily changed through simple interaction.

In one embodiment, when the confirmed goods information needs to be transmitted to the cashing POS system, the confirmed goods information is transmitted to the POS system through a wired or wireless network, or when the confirmed goods information needs to be transmitted to the price tag printer, the confirmed goods information is transmitted to the price tag printer through a wired or wireless network, or when the confirmed goods information needs to be fed back to the modeling platform, the confirmed goods information is uploaded to the modeling platform in a cloud through a wired or wireless network.

In one embodiment, when it is required to return to a system setting interface, the user can return to the system setting interface by sliding on the screen from left to right or from top to bottom. In this way, it can be returned to the system setting interface through simple interaction.

In one embodiment, the modeling platform is configured to use a computer vision technology based on deep learning to train the identification model based on the collected visual information, weight information and data of user feedback in use, herein the goods weight information is applied to set a weight filtering rule to filter out the identification results of goods whose weight is greater than a goods maximum weight or less than a goods minimum weight, or is applied to statistical goods weight distribution models to assist goods identification; the data of user feedback in use is applied to continuous iterative optimization of the identification model; the trained identification model is distributed to different computing platforms, such as terminal, edge computing or cloud computing platforms.

In one embodiment, the goods information synchronization component is configured to update the updated goods information into the intelligent weighing apparatus to support display of candidate goods information, herein the goods information synchronization component includes two forms of a windows program and a mobile phone APP, completes the update of goods information through database connecting, file uploading and manual editing, and supports the update of goods information in the intelligent weighing apparatus through two connection modes of a merchant intranet and an extranet.

In one embodiment, the intelligent weighing apparatus does not include a cashing POS system and a price tag printer, and is connected as a whole with an external cashing POS system. This can be used as a visual weighing plug-in to be plugged and used with the merchant's cashing POS system. Or the intelligent weighing apparatus includes a cashing POS system, so as to be used as an integrated visual weighing and collecting machine. Or the intelligent weighing apparatus includes a price tag printer, so as to print the price tag, and customers can take the price tag to the cashier POS machine for scanning the price tag for payment after weighing.

The identification feedback device in the intelligent weighing apparatus may be a touch screen, or the intelligent weighing apparatus may not include the touch screen, but be connected with other devices with touch screens or other user interfaces as plug-ins.

In this scheme, a complete iterative closed loop of the identification model is established for the first time to ensure the continuous iteration and optimization of the identification model in use and realizes the efficient and accurate identification of weighed goods. For the first time, the intelligent weighing is combined with the cashing machine, and an efficient solution of integrating cashing and weighing is realized.

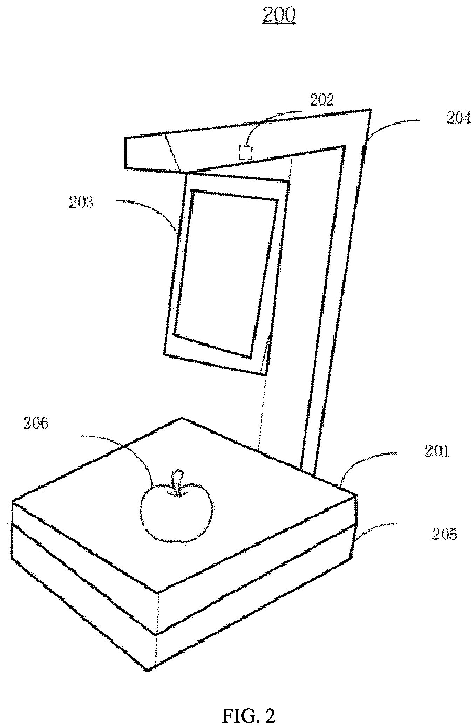

FIG. 2 schematically illustrates the external structural diagram of an intelligent weighing apparatus according to an embodiment of the present disclosure. The intelligent weighing apparatus 200 may include: a chassis 205; a weighing platform 201, which is connected with the chassis 205 and used for weighing a goods 206 (such as an apple) placed on it; a support rod 204 connected with the chassis 205; a visual sensor 202 arranged on or outside the weighing platform 201, or on the support rod 204 connected with the chassis 205 of the weighing platform 201, for example, as shown in FIG. 2, on the upper part of the support rod 204, and its collecting area covers at least one part of the weighing platform 201 or its surrounding area, for example, as shown in FIG. 2 where the collecting area covers a top view plane of the weighing platform 201.

The intelligent goods identification and weighing structure 200 may further include: a man-machine interactor 203, which is removably connected with the support rod 204, herein the man-machine interactor 203's position can be adjusted relative to the support rod, so as to facilitate users who use the intelligent goods identification and weighing structure 200 to view contents displayed on the man-machine interactor 203 and operate the man-machine interactor 203.

The positions, shapes and sizes of the chassis 205, the weighing platform 201, the support rod 204 and the man-machine interactor 203 shown in FIG. 2 are only examples, not limitations, and may be changed according to actual situations. For example, the size of the chassis 205 may be larger than the size of the weighing platform 201, so as to obtain a better center of gravity and maintain the stablization of the whole structure. The support rod 204 may be a vertical rod instead of an L-shape. The position of an image collecting component 202 may be located at a right angle of the support rod 204 instead of the top of the support rod 204, and the human-computer interactor 203 may also not be located on one side of the support rod 204, instead it may be located with its center on the support rod 204 so that the human-computer interactor is located in the center. The connection modes between these structures may also adopt the existing connection modes, which may be a fixed connection, removable or rotatable connection.

Chips, integrated circuits or functional modules that can realize the functions and methods of intelligent goods identification and weighing together with the weighing platform, the image collecting component 202 and the human-computer interactor 203 may also be arranged inside or outside the chassis 205 or the support rod 204 or at the parts connected with it.

The above assemblies are schematic, and some assemblies may be deleted or other assemblies may be added as needed. For example, a microphone, a voice identification device and a speaker may be added, and are configured to perform voice interaction with users to perform various controls. A price tag printer may be added to support printing price tags. USB cable, serial data cable and network cable may be added to support data transmission.

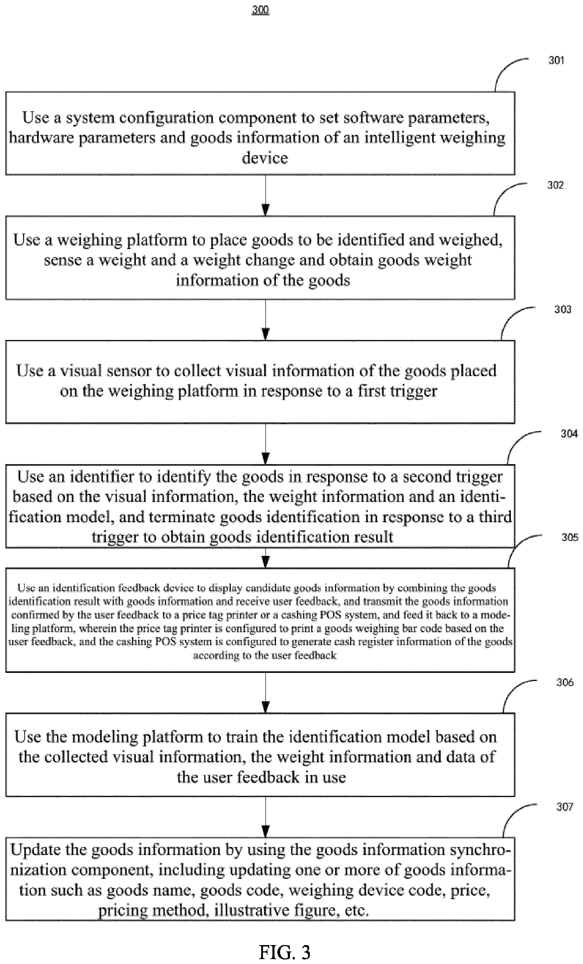

FIG. 3 schematically illustrates a flowchart of an intelligent weighing method 300 according to one embodiment of the present disclosure.

The intelligent weighing method 300 includes the following steps: at step 301, setting software parameters, hardware parameters and goods information of the intelligent weighing apparatus by using a system configuration component; at step 302, placing a goods to be identified and weighed by using a weighing platform, sensing a weight and a weight change, and obtaining goods weight information of the goods; at step 303, using a visual sensor to collect the visual information of the goods placed on the weighing platform in response to a first trigger; at step 304, using an identifier to identify the goods in response to a second trigger based on the visual information, the weight information and an identification model, and to terminate the goods identification in response to a third trigger to obtain goods identification results; at step 305, displaying candidate goods information by using the identification feedback device, by combining the goods identification result with goods information and receive user feedback, and transmit the goods information confirmed in the user feedback to a price tag printer or a cashing POS system, and feed it back to a modeling platform, herein the price tag printer is configured to print a goods weighing bar code based on the user feedback, and the cashing POS system is configured to generate cash register information of the goods according to the user feedback; at step 306, using the modeling platform to train an identification model based on the collected visual information, the weight information and data of the user feedback in use; at step 307, updating the goods information by using a goods information synchronization component, including updating one or more of goods information such as goods name, goods code, weighing apparatus code, price, pricing method, illustrative figure, etc.

In one embodiment, the system configuration component is configured to set the hardware parameters including different hardware model selection of the weighing platform and the price tag printer.

In one embodiment, the system configuration component is configured to set hardware parameters of the visual sensor, including a preview resolution, whether to cut the main body area out, and parameters for cutting the main body area out.

In one embodiment, the system configuration component is configured to set hardware parameters of tare setting for the weighing platform, including three modes of not subtracting tare weight, one-time subtracting tare weight and continuously subtracting tare weight.

In one embodiment, the system configuration component is configured to set software parameters including merchant selection, store selection and goods management, herein the goods management includes goods information of name, code, price and illustrative figures for browsing and editing.

In one embodiment, the first trigger includes automatically triggering the visual sensor to collect the visual information of the goods placed on the weighing platform when the weighing platform senses that a weight changes and the weight is not zero, and the second trigger includes automatically triggering the identifier to identify goods when the weighing platform senses that a weight changes and the weight is not zero, and the third trigger includes the weight signal being stable so that a stable weight signal is taken as goods weight information for calculating a total price of goods and generating a goods weighing bar code.

In one embodiment, the visual sensor is configured to collect visual information of goods placed on the weighing platform, herein the visual information includes at least one of images and videos, and the visual sensor is configured to collect visual information for building models for new goods; and collect visual information for the goods to be identified, herein the visual sensor is configured to carry out a capturing mode including a single-capturing-a-photo-mode, a continuous-capturing-multiple-photos-mode and a video-capturing-mode when collecting visual information for building models for new goods, and is configured to carry out a capturing mode including a single-capturing-a-photo-mode, a continuous-capturing-multiple-photos-mode and a video-capturing-mode when collecting visual information for the goods to be identified.

In one embodiment, the second trigger includes a changes of a content of a visual signal collected by the visual sensor to trigger the identifier to identify the goods, and the third trigger includes stabilization of the visual signals to terminate the identification of the goods.

In one embodiment, the visual sensor is located above or on a side of the weighing platform, so as to be able to perceive visual information of goods on the weighing platform with a definition higher than a predetermined definition, and when the hardware parameters of the visual sensor are set to cut the main body area out, the main body area of the collected visual information is cut out according to the parameters for cutting the main body area out.

In one embodiment, the second trigger includes a manual selection.

In one embodiment, the identification model is configured to perform a conditional filtering or statistical regression to filter out candidate identification results whose weight is greater than a maximum goods weight or less than a minimum goods weight by using a computer vision technology based on deep learning, combined with goods weight information. The identifier is configured to complete identification calculation of the goods identification by using a computing unit in the intelligent weighing apparatus, an adjacent edge computing unit, or a cloud computing unit.

In one embodiment, the cashing POS system includes a POS system of a traditional cash register and a POS system of a self-help cash register. The identification feedback device is configured to adopt an adaptive display strategy based on an identification confidence when displaying candidate goods information, herein when the identification confidences of goods identification results are higher than a predetermined confidence, only goods identification results of a number lower than a predetermined number with a confidence higher than the predetermined confidence are displayed as candidate goods information, and when the identification confidences of goods identification results are lower than the predetermined confidence, the number of displayed goods identification results is increased as candidate goods information.

In one embodiment, interactive behaviors of receiving user feedback by using the identification feedback device include clicking to confirm, re-identifying, searching, screening, modifying the price and returning to the system configuration; the interactive behaviors of user feedback include automatically confirming the goods identification results under predetermined conditions, and the user feedback is automatically transmitted to the price tag printer or cashing POS system and fed back to the modeling platform, herein the predetermined conditions include that the identification confidence exceeds an automatic publishing threshold, or a user feedback time exceeds a waiting threshold.

In one embodiment, the identification feedback device includes a search component, which enables users to search goods by using initials letters of goods names or codes, and simultaneously displays trending search candidate goods.

In one embodiment, the identification feedback device includes a screening component, and the screening component is configured to preferentially display a list of clearance goods of the same or related categories according to the goods identification results.

In one embodiment, the identification feedback device includes a price modification component, and the price modification component is configured to receive an interactive action of long-pressing a goods information display card of candidate goods information or an element of goods icon and name in the card, and trigger a pop-up price modification tag, so that the user can modify a unit price, a total price or a discount coefficient of the goods. When the selected good is a piece-based goods, the quantity of the goods is fed back through an automatic pop-up window.

In one embodiment, when the confirmed goods information needs to be transmitted to the cashing POS system, the confirmed goods information is transmitted to the POS system through a wired or wireless network, or when the confirmed goods information needs to be transmitted to the price tag printer, the confirmed goods information is transmitted to the price tag printer through a wired network, or when the confirmed goods information needs to be fed back to the modeling platform, the confirmed goods information is uploaded to the modeling platform in a cloud through a wired or wireless network.

In one embodiment, when it is required to return to a system setting interface, the user can return to the system setting interface by sliding on the screen from left to right or from top to bottom.

In one embodiment, the modeling platform is configured to use a computer vision technology based on deep learning to train the identification model based on the collected visual information, the weight information and the data of the user feedback in use, herein the goods weight information is applied to set a weight filtering rule to filter out the identification results of goods whose weight is greater than the maximum goods weight or less than the minimum goods weight, or is applied to statistical goods weight distribution models to assist goods identification; the data of the user feedback in use is applied to the continuous iterative optimization of the identification model; the trained identification model is distributed to different computing platforms, such as terminal, edge computing or cloud computing platforms.

In one embodiment, the goods information synchronization component is configured to update the updated goods information into the intelligent weighing apparatus to support the display of candidate goods information, herein the goods information synchronization component, including two forms of a Windows^{®} program and a mobile phone APP, completes the update of goods information through database connecting, file uploading and manual editing, and supports the update of goods information in the intelligent weighing apparatus through two connection modes of a merchant intranet and an extranet.

In one embodiment, the intelligent weighing apparatus does not include a cashing POS system and a price tag printer, and is connected as a whole with an external cashing POS system; or the intelligent weighing apparatus includes a cashing POS system; or the intelligent weighing apparatus includes a price tag printer.

In this scheme, a complete iterative closed loop of the identification model is established for the first time to ensure the continuous iteration and optimization of the identification model in use, thereby realizing the efficient and accurate identification of weighed goods. For the first time, the intelligent weighing is combined with the cashier, and an efficient solution of integrating cashing and weighing is realized.

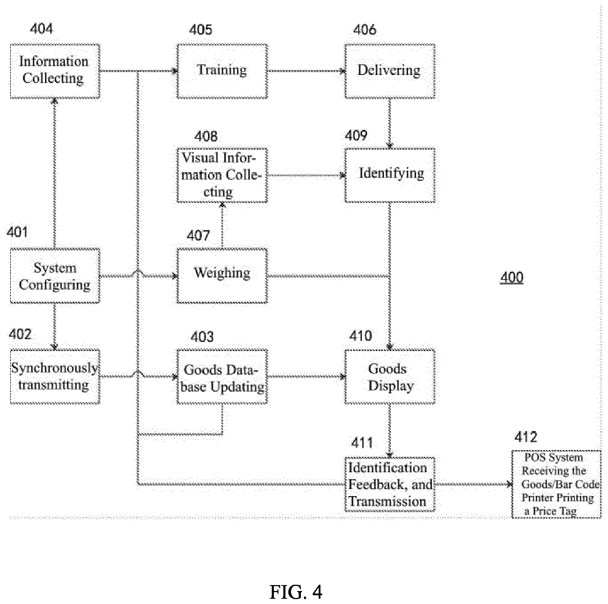

FIG. 4 schematically illustrates a flowchart of an intelligent weighing method 400 according to another embodiment of the present disclosure. As shown in the figure, the intelligent weighing method 400 includes the following steps: S401, system configuring, for setting software and hardware parameters and merchant information; S402, synchronously transmitting, for uploading goods information, including one or more of the obtained goods information such as goods name, goods code, weighing apparatus code, price, pricing method, illustrative figure, etc.; S403, goods database updating, for uploading the information uploaded at S402 into a database; S404, information collecting, for collecting visual information and goods weight information; S405, training a identification model by combining the visual information with the weight information of the goods; S406, delivering the identification model to the identification service; S407, placing the goods to be weighed on the weighing platform and to get weighed to obtain weight information; S408, collecting visual information of goods; S409, identifying the goods types by using the identification model in an identification service; S410, displaying the goods information of the candidate identification result; S411, identification feedback, for receiving user feedback information, transmiting the confirmation result to a POS system or a bar code printer, and update it to a cloud training platform to support iterative updating of the model; and S412, adding the goods information in the cashing POS system, or priting the price tag by the bar code printer.

In one embodiment, S401 system configuring includes hardware parameter setting, software parameter setting and merchant information setting. Hardware parameter setting includes different hardware model selection of weighing platform and price tag printer. The hardware parameter setting also includes visual sensor setting, including a preview resolution, whether to cut a main body area out, parameters for cutting the main body area out and so on. Hardware parameter setting also includes tare setting of weighing platform, including three modes of not subtracting tare weight, one-time subtracting tare weight and continuously subtracting tare weight. Software parameter setting includes merchant selection, store selection and goods management. Among them, goods management also includes browsing and editing goods information such as name, code, price and pictures.

In one embodiment, S402 synchronously transmitting includes two forms of: a windows^{®} program and a mobile phone APP, and the change of goods information is completed through database connecting, file uploading and manual editing. At the same time, it supports updating the goods information in the intelligent weighing apparatus through two connection modes of: a merchant intranet and an extranet. The synchronized information includes one or more of goods information such as goods name, goods code, weighing apparatus code, price, pricing method, illustrative figure, etc.

In one embodiment, S403 is goods database updating, in which the goods database may be deployed in the merchant intranet, and the goods information in the intelligent weighing apparatus is updated through the merchant intranet.

In one embodiment, S403 is goods updating, in which the goods database may be deployed in a cloud, and the goods information in the intelligent weighing apparatus is updated through the external network.

In one embodiment, at S404 of information collecting, goods images are collected through a single-capturing-photo-mode; in one embodiment, at S404 of information collecting, goods images are collected through a single-capturing-photo-mode; in one embodiment, at S404 of information collecting, goods images are collected through a continuous-capturing-multiple-photos-mode; in one embodiment, at S404 of information collecting, goods images are collected through a video-capturing-mode; in one embodiment, at S404 of information collecting, the main body area of visual information is cut out based on the system configuration; in one embodiment, at S404 of information collecting, at the same time, goods weight information is collected.

In one embodiment, at S405, based on the visual information of goods, the goods identification model is trained through computer vision technology based on deep learning. The visual information of goods may come from collected data, refluxed data or their combination. In one embodiment, the goods weight information is configured to build a conditional filtering model to filter out the candidate identification results whose weight is greater than a maximum goods weight or less than a minimum goods weight.

In one embodiment, at S406, the model is delivered to a computing unit on the intelligent weighing apparatus, and the identification calculation is completed by a terminal computing unit; in one embodiment, at S406, the model is delivered to an edge computing unit, and the edge computing unit of the neighboring merchants is configured to complete identification calculation; in one embodiment, at S406, the model is delivered to a cloud server, and the cloud server is configured to complete identification calculation.

In one embodiment, at S407 of weighing, the weight change is sensed, and the weight of the goods is obtained. The change of weight signal is used as an identification trigger. When the weight changes and the weight is not zero, it can automatically trigger the visual sensor to collect a visual signal, and the identifier can identify the goods. The stablization of the weight signal is one of the judging conditions for the termination of the identification, and a stable weight signal is used as the weight of the goods to calculate the total price of the goods and generate the bar code information of the goods.

In one embodiment, at S408 of goods visual information collecting, collecting goods images starts when the weight changes, and the goods images and weights are transmitted into S409 for goods identifying. At S409, based on the goods image and weight, the goods category is predicted by the visual model and the weight model. When the weight and image of the goods are stable, the identification stops, and a list of the candidate goods and their confidences is produced.

In one embodiment, at S410 of goods display, an adaptive display strategy based on an identification confidence is adopted. When the identification result has a high confidence, only a few high confidence results are displayed, and when the identification result has a low confidence, the number of displayed goods is increased. While ensuring the identification recall rate, it reduces the difficulty of selection.

In one embodiment, at S411 of identification feedback, the user's interactive behaviors on the identification results include clicking to confirm, re-recognizing, searching, screening, modifying the price, and returning to the system configuration. Among them, the search component is configured so that users can search goods by using the initials of goods names or codes, and at the same time, trending search candidates are displayed, which improves the search efficiency of users. The screening component is configured to give priority to displaying the list of clearance goods of similar categories according to the goods identification results, so as to improve the screening efficiency of users. The price modification component is configured to display the card or the goods icon, name and other elements in the card by long pressing the goods information, and triggering the pop-up price modification label, which can enable users to modify a unit price, a total price or a discount coefficient of the goods. When the goods are goods counted by pieces, the quantity of the goods is fed back through an automatic pop-up window. When it is needed to return to the system settings, the system setting interface can be returned to by sliding on the screen from left to right or from top to bottom.

In one embodiment, at S411 of identification feedback, the identification result can be automatically confirmed. When the identification confidence exceeds the automatic publishing threshold, or the user feedback time exceeds the waiting threshold, the corresponding result is automatically transmitted to the price tag printer or POS system and fed back to the modeling platform.

In one embodiment, at S411 of identification feedback, when the goods information needs to be transmitted to the POS system, the confirmed goods information is transmitted to the POS system through a wired network.

In one embodiment, at S411 of identification feedback, when the goods information needs to be transmitted to the POS system, the confirmed goods information is transmitted to the POS system through software communication.

In one embodiment, at S411 of identification feedback, when the goods information needs to be transmitted to the price tag printer, the confirmed goods information is transmitted to the price tag printer through a wired network.

In one embodiment, at S411 of identification feedback, when the user feedback information needs to be uploaded to the modeling platform, it is uploaded to the cloud platform through a wireless network. In one embodiment, at S411 of identification feedback, when the user feedback information needs to be uploaded to the modeling platform, it is uploaded to the cloud platform through a wired network.

In one embodiment, at S401, the POS system adds goods information to support further cashier actions; in one embodiment, at S412, the bar code printer prints a price tag, which supports users to record a price into the POS system by scanning the code.

In this scheme, a complete iterative closed loop of the identification model is established for the first time to ensure the continuous iteration and optimization of the identification model in use and realize the efficient and accurate identification of weighed goods. For the first time, intelligent weighing is combined with the cashier, and an efficient solution of integrating cashing and weighing is realized.

Of course, the above-mentioned specific embodiments are only examples, not limitations, and those skilled in the art may combine some steps and devices from the above-mentioned separately described embodiments according to the concept of this disclosure to achieve the effects of this disclosure. Such combined embodiments are also included in this disclosure, thus are not described here.

Note that the advantages, benefits, effects, etc. mentioned in this disclosure are only examples rather than limitations, and these advantages, benefits, effects, etc. cannot be considered as necessary for each embodiment of this disclosure. In addition, the specific details disclosed above are only for the purpose of illustration and easy understanding, but not for limitation, and the above details do not limit that the disclosure must be realized with the above specific details.

The block diagrams of systems, methods and devices involved in this disclosure are only illustrative examples and are not intended to require or imply that they must be connected, arranged and configured in the manner shown in the block diagram. As those skilled in the art will recognize, these systems, methods and devices may be connected, arranged and configured in any way. Words such as "including", "containing", "having" and so on are inclusive words, which mean "including but not limited to" and may be used interchangeably with them. The terms "or" and "and" as used herein refer to the terms "and/or" and may be used interchangeably with them unless the context clearly indicates otherwise. The word "such as" used here refers to the phrase "such as but not limited to" and may be used interchangeably with it.

The flowchart of steps in this disclosure and the above method description are only illustrative examples and are not intended to require or imply that the steps of various embodiments must be performed in the given order. As those skilled in the art will recognize, the sequence of steps in the above embodiments may be performed in any order. Words such as "thereafter", "then", "next" and so on are not intended to limit the order of steps; these words are only configured to guide the reader through the descriptions of these methods. Furthermore, any reference to an element in the singular, such as using the articles "a", "an" or "the", is not to be construed as limiting the element to the singular.

In addition, the steps and devices in various embodiments herein are not limited to a certain embodiment. In fact, some related steps and devices in various embodiments herein may be combined to conceive new embodiments according to the concepts of this disclosure, and these new embodiments are also included in the scope of this disclosure.

## Claims

1. An intelligent weighing apparatus based on computer vision technology, comprising:
a system configuration component, configured to set system configuration of software parameters, hardware parameters and merchant information of the intelligent weighing apparatus;
a weighing platform, configured to place a goods to be identified and weighed, sense a weight and a weight changes, and obtain goods weight information of the goods;
a visual sensor, configured to collect visual information of the goods placed on the weighing platform in response to a first trigger;
an identifier, configured to identify the goods based on the visual information, the weight information and an identification model in response to a second trigger, and to terminate goods identification in response to a third trigger to obtain goods identification results; wherein the first trigger includes automatically triggering the visual sensor to collect the visual information of the goods placed on the weighing platform when the weighing platform senses that a weight changes and the weight is not zero, and the second trigger includes automatically triggering the identifier to identify goods when the weighing platform senses that a weight changes and the weight is not zero, and the third trigger includes a weight signal being stable so that the stable weight signal is taken as goods weight information for calculating a total price of goods and generating a goods weighing bar code; the identification model is configured to perform a conditional filtering or statistical regression to filter out candidate identification results whose weight is greater than a maximum goods weight or less than a minimum goods weight by using a computer vision technology based on deep learning, by considering the goods weight information, the identifier is configured to complete identification calculation of the goods identification by using a computing unit in the intelligent weighing apparatus, an adjacent edge computing unit, or a cloud computing unit;
an identification feedback device, configured to display candidate goods information by combining the goods identification results and goods information, receive user feedback, and transmit the goods information confirmed by the user feedback to a price tag printer or a cashing POS system and feed it back to a modeling platform, wherein the price tag printer is configured to print a goods weighing bar code based on the user feedback, and the cashing POS system is configured to generate cashing information of the goods according to the user feedback; the identification feedback device is configured to adopt an adaptive display strategy based on an identification confidence when displaying candidate goods information, wherein when the identification confidences of goods identification results are higher than a predetermined confidence, only goods identification results of a number lower than a predetermined number with a confidence higher than the predetermined confidence are displayed as candidate goods information, and when the identification confidences of goods identification results are lower than the predetermined confidence, the number of displayed goods identification results is increased as candidate goods information; interactive behaviors of the identification feedback device receiving user feedback include clicking to confirm, re-identifying, searching, screening, modifying the price and returning to the system configuration; the interactive behaviors of user feedback include automatically confirming the goods identification results under predetermined conditions, and the user feedback is automatically transmitted to the price tag printer or cashing POS system and fed back to the modeling platform, wherein the predetermined conditions include that the identification confidence exceeds an automatic publishing threshold, or a user feedback time exceeds a waiting threshold;
a modeling platform, configured to train the identification model based on the collected visual information, the weight information and data of the user feedback in use; the modeling platform is configured to use a computer vision technology based on deep learning to train the identification model based on the collected visual information, the weight information and data of the user feedback in use, wherein the goods weight information is applied to set a weight filtering rule to filter out the identification results of goods whose weight is greater than a goods maximum weight or less than a goods minimum weight, or is applied to build a goods weight distribution model to assist goods identification; the data of user feedback in use is applied to continuous iterative optimization of the identification model; and the trained identification model is sent to different computing platforms of terminal, edge computing or cloud; and
a goods information synchronization component, configured to update goods information, including updating one or more of goods information of goods name, goods code, weighing apparatus code, price, pricing method, illustrative figure and the like; wherein the goods information synchronization component is configured to update the updated goods information into the intelligent weighing apparatus to support display of candidate goods information, wherein the goods information synchronization component includes two forms of a windows program and a mobile phone APP, completes the update of goods information through database connecting, file uploading and manual editing, and supports the update of goods information in the intelligent weighing apparatus through two connection modes of a merchant intranet and an extranet.

2. The intelligent weighing apparatus according to claim 1, wherein the system configuration component is configured to set hardware parameters including different hardware model selections of the weighing platform and the price tag printer:
wherein the system configuration component is configured to set hardware parameters for setting the visual sensor, including a preview resolution, whether to cut a main body area out, parameters for cutting the main body area out;
wherein the system configuration component is configured to set hardware parameters for tare weight setting of the weighing platform, including three modes of not subtracting tare weight, one-time subtracting tare weight and continuously subtracting tare weight; and
wherein the system configuration component is configured to set software parameters including merchant selection, store selection and goods management, wherein the goods management includes goods information of name, code, price and pictures for browsing and editing.

3. The intelligent weighing apparatus according to claim 1, wherein the visual sensor is configured to collect visual information of the goods placed on the weighing platform, wherein the visual information includes at least one of images and videos, and the visual sensor is configured to collect visual information for building models for new goods; and collect visual information for the goods to be identified, wherein the visual sensor is configured to carry out a capturing mode including a single-capturing-a-photo-mode, a continuous-capturing-multiple-photos-mode and a video-capturing-mode when collecting visual information for building models for new goods, and is configured to carry out a capturing mode including a single-capturing-a-photo-mode, a continuous-capturing-multiple-photos-mode and a video-capturing-mode when collecting visual information for the goods to be identified; and
wherein the visual sensor is located above or on a side of the weighing platform, so as to be able to perceive visual information of goods on the weighing platform with a definition higher than a predetermined definition, and when the hardware parameters of the visual sensor are set to cut a main body area out, the main body area of the collected visual information is cut according to the parameters for cutting the main body area out.

4. The intelligent weighing apparatus according to claim 1, wherein the second trigger includes a changes of a content of a visual signal collected by the visual sensor to trigger the identifier to identify the goods, and the third trigger includes stabilization of the visual signals to terminate the identification of the goods;
wherein the second trigger includes manual selection.

5. The intelligent weighing apparatus according to claim 1, wherein the cashing POS system includes a POS system of a traditional cash register and a POS system of a self-service cash register.

6. The intelligent weighing apparatus according to claim 1:
wherein, the identification feedback device includes a search component configured for a user to search goods by using initials of goods names or codes, and at the same time, to display trending search candidate goods;
wherein the identification feedback device includes a screening component configured to preferentially display a list of clearance goods of the same or related categories according to the goods identification results;
wherein, the identification feedback device includes a price modification component configured to receive an interactive action of long-pressing a goods information display card of candidate goods information or an element of goods icon or name in the card, and trigger a pop-up of a price modification label, so that the user can modify unit price, total price or a discount coefficient of the goods; and when the selected good is a piece-based goods, a quantity of the goods is fed back through an automatic pop-up window.

7. The intelligent weighing apparatus according to claim 6, wherein, when the confirmed goods information needs to be transmitted to the cashing POS system, the confirmed goods information is transmitted to the POS system through a wired or wireless network, or when the confirmed goods information needs to be transmitted to the price tag printer, the confirmed goods information is transmitted to the price tag printer through a wired or wireless network, or when the confirmed goods information needs to be fed back to the modeling platform, the confirmed goods information is uploaded to the modeling platform in a cloud through a wired or wireless network;
wherein when it is required to return to a system setting interface, the user can return to the system setting interface by sliding on the screen from left to right or from top to bottom; and
wherein, the intelligent weighing apparatus does not include a cashing POS system as a whole and is connected with an external cashing POS system; or the intelligent weighing apparatus includes a cashing POS system; or the intelligent weighing apparatus includes a price tag printer.

8. An intelligent weighing method for an intelligent weighing apparatus based on computer vision technology, including the following steps:
setting software parameters, hardware parameters and goods information of the intelligent weighing apparatus by using a system configuration component;
placing a goods to be identified and weighed by using a weighing platform, sensing a weight and a weight change, and obtaining goods weight information of the goods;
collecting visual information of goods placed on the weighing platform by using a visual sensor in response to a first trigger;
using an identifier to identify the goods in response to a second trigger based on the visual information, the weight information and an identification model, and terminate goods identification in response to a third trigger to obtain goods identification results; wherein the first trigger includes automatically triggering the visual sensor to collect the visual information of the goods placed on the weighing platform when the weighing platform senses that a weight changes and the weight is not zero, and the second trigger includes automatically triggering the identifier to identify goods when the weighing platform senses that a weight changes and the weight is not zero, and the third trigger includes a weight signal being stable so that the stable weight signal is taken as goods weight information for calculating a total price of goods and generating a goods weighing bar code; the identification model is configured to perform a conditional filtering or statistical regression to filter out candidate identification results whose weight is greater than a maximum goods weight or less than a minimum goods weight by using a computer vision technology based on deep learning, combined with goods weight information, the identifier is configured to complete identification calculation of the goods identification by using a computing unit in the intelligent weighing apparatus, an adjacent edge computing unit, or a cloud computing unit;
using the identification feedback device to display candidate goods information by combining the goods identification results and goods information, receive user feedback, and transmit the goods information confirmed by a user feedback to a price tag printer or a cashing POS system and feed it back to a modeling platform, wherein the price tag printer is configured to print a goods weighing bar code based on the user feedback, and the cashing POS system is configured to generate cashing information of the goods according to the user feedback; the identification feedback device is configured to adopt an adaptive display strategy based on an identification confidence when displaying candidate goods information, wherein when the identification confidences of goods identification results are higher than a predetermined confidence, only goods identification results of a number lower than a predetermined number with a confidence higher than the predetermined confidence are displayed as candidate goods information, and when the identification confidences of goods identification results are lower than the predetermined confidence, the number of displayed goods identification results is increased as candidate goods information; interactive behaviors of the identification feedback device receiving user feedback include clicking to confirm, re-identifying, searching, screening, modifying the price and returning to the system configuration; the interactive behaviors of user feedback include automatically confirming the goods identification results under predetermined conditions, and the user feedback is automatically transmitted to the price tag printer or cashing POS system and fed back to the modeling platform, wherein the predetermined conditions include that the identification confidence exceeds an automatic publishing threshold, or a user feedback time exceeds a waiting threshold;
using the modeling platform to train the identification model based on the collected visual information, the weight information and data of the user feedback in use; the modeling platform is configured to use a computer vision technology based on deep learning to train the identification model based on the collected visual information, the weight information and data of the user feedback in use, wherein the goods weight information is applied to set a weight filtering rule to filter out the identification results of goods whose weight is greater than a goods maximum weight or less than a goods minimum weight, or is applied to build a goods weight distribution model to assist goods identification; the data of user feedback in use is applied to continuous iterative optimization of the identification model; and the trained identification model is sent to different computing platforms of terminal, edge computing or cloud; and
using a goods information synchronization component to update goods information, configured to update goods information, including updating one or more of goods information such as goods name, goods code, weighing apparatus code, price, pricing method, illustrative figure, etc; the goods information synchronization component is configured to update the updated goods information into the intelligent weighing apparatus to support display of candidate goods information, wherein the goods information synchronization component includes two forms of a Windows^{®} program and a mobile phone APP, completes the update of goods information through database connecting, file uploading and manual editing, and supports the update of goods information in the intelligent weighing apparatus through two connection modes of a merchant intranet and an extranet.

9. An intelligent weighing method, including the following steps:
system configuring, for setting the system configuration of software parameters, hardware parameters and goods information;
synchronously transmitting, including two forms of a Windows^{®} program and a mobile phone APP, for completing the change of goods information through database connecting, uploading files and manual editing; supporting the updating of the goods information in the intelligent weighing apparatus through two connection modes: a merchant intranet and an extranet; and uploading one or more kinds of goods information including the obtained goods name, goods code, weighing apparatus code, price, pricing method and illustrative figure;
goods database updating, for updating the uploaded information to a database;
information collecting, for collecting visual information and goods weight information;
training an identification model by combining the visual information and goods weight information;
delivering the identification model to an identification service;
weighing a goods to be weighed that is placed on the weighing platform to obtain weight information; wherein when the weighing platform senses that a weight changes and the weight is not zero, it automatically triggers the visual sensor to collect the visual information of the goods placed on the weighing platform;
collecting the visual information of goods;
identifying types of goods by using the identification model in the identification service; performing conditional filtering or statistical regression to filter out the candidate identification results whose weight is greater than a maximum goods weight or less than a minimum goods weight by using a computer vision technology based on deep learning combined with the goods weight information, and using a computing unit on the intelligent weighing apparatus, an adjacent edge computing unit or a cloud computing unit to complete identification calculation of goods identification;
displaying goods information of the candidate identification result; when displaying candidate goods information, an adaptive display strategy based on an identification confidence is adopted, wherein when the identification confidences of goods identification results are higher than a predetermined confidence, only goods identification results of a number lower than a predetermined number with a confidence higher than the predetermined confidence are displayed as candidate goods information, and when the identification confidences of goods identification results are lower than the predetermined confidence, the number of displayed goods identification results is increased as candidate goods information;
identification feedback, for receiving user feedback information, transmitting the confirmed result to a cashing POS system or a bar code printer, and updating it to a cloud training platform to support iterative updating of the model; the interactive behaviors of user feedback include clicking to confirm, re-identifying, searching, screening, modifying the price, and returning to the system configuration; interactive behaviors of the user feedback include automatically confirming the goods identification results under predetermined conditions, and the user feedback is automatically transmitted to the price tag printer or cashing POS system and fed back to the modeling platform, wherein the predetermined conditions include that the identification confidence exceeds an automatic publishing threshold, or a user feedback time exceeds a waiting threshold; based on the collected visual information, the weight information and data of the user feedback in use, the identification model is trained by computer vision technology based on deep learning, and the data of the user feedback in use is applied to continuous iterative optimization of the identification model; the trained identification model is sent to different computing platforms of terminal, edge computing or cloud; and
the cashing POS system adding goods information, or a bar code printer printing a price tag.
